# EUROPEAN PATENT SPECIFICATION

(11) **EP 2 872 301 B1**
(45) Date of publication and mention of the grant of the patent: **11.01.2017**
(21) Application number: 12880894.6
(22) Date of filing: 13.07.2012
(51) Int. Cl.: B25J 17/02, B25J 19/00

(54) **STRUCTURE USED FOR ROBOT**
STRUKTUR FÜR ROBOTER
STRUCTURE UTILISÉE POUR UN ROBOT

(43) Date of publication of application: 20.05.2015
(73) Proprietor: ABB Schweiz AG, 5400 Baden (CH)
(72) Inventor: CAO, Xiaodong, Dalian Liaoning 116023 (CN)
(74) Representative: Zimmermann & Partner Patentanwälte mbB
(86) International application number: PCT/CN2012/078633
(87) International publication number: WO 2014/008668

(56) References cited:
- CN-A- 101 767 339
- CN-A- 102 101 299
- JP-A- H02 160 498
- JP-A- H07 156 093
- JP-A- 2000 350 953
- JP-A- 2001 310 289
- JP-A- 2006 159 302
- US-A1- 2005 193 854
- US-A1- 2010 237 178
- US-A1- 2011 262 257

## Description

### FIELD OF INVENTION

The present invention relates to the field of industrial robot, especially a structure used for a joint robot.

### BACKGROUND OF INVENTION

An increasing number of industrial robots are applied to industry, such as spot welding robot, arc welding robot, painting robot etc. Joint robot is needed in order to gain better movement flexibility. To support control and application of a robot, various signals or transmission medium like gas, bus, Ethernet and etc. will be connected to a robot wrist so that a user can connect it with a tooling mounted on flange. During application, one problem is that the cable routing could make wrist fatter and the cable around wrist could interfere with surroundings, such that the cycle time and commissioning time will increase.

A hollow flange is one solution to solve this problem. By routing the cables inside a hollow space of the flange on the robot's wrist, the inner space of the robot is utilized sufficiently. Meanwhile, the cable does not go around the wrist so that it will not interfere with the surroundings or be damaged. Like in arc welding robot, the hollow torch is used to increase life time. But for small robot, especially for 3C application (computer, communication, and consumption electronic product), few robot has hollow flange because the robot wrist is too compact already.

JP H02 160498 A relates to an industrial robot including an arm part and a rocking section with a rocking-central-axis line. A cable penetrates a communication hole and is laid over the arm part and the rocking section. The cable is wrapped with a spring for protection. One end of the spring is fixed with a saddle in a guiding part of the drum. The other end is fixed to the arm part side with a saddle.

JP H07 156093 discloses moreover a structure used for a robot, comprising a robot trunk and a robot upper arm which is pivotally mounted on the trunk. A cable is arranged to extend along the trunk, to wind around the pivot joint of the arm and to pass through the arm. The cable is hold on the joint by a first clamp and hold on the trunk by another clamp.

### SUMMARY OF INVENTION

Hence, one of objectives of the embodiments of the present invention is to provide a structure in a non-hollow robot used for cable and air channel to go through.

According to one aspect of the present invention, there is provided a robot structure, comprising a housing; a tilt coupled to the housing and arranged to be rotatable around a rotary axis relative to the housing; a cable arranged to extend along a side of the housing and pass through the tilt; and a first clamp member provided on the tilt, arranged to hold a portion of the cable to pass through the tilt such that one end of the cable is rotatable with the tilt around the rotary axis.
The structure further comprises a second clamp member provided on the side of the housing and arranged to hold another end of the cable, wherein a length of the cable between the first clamp member and the second clamp member enables the tilt to rotate to two limit positions thereof. The structure further comprises a cable box mounted on the side of the housing, the cable box having an inlet and an outlet on one side thereof close to the tilt, wherein the cable enters the cable box from the inlet after being clamped by the second clamp member, then forms the first curved part in the cable box, then exits from the outlet, and is clamped by the first clamp member.

According to an exemplary embodiment, the first curved part of the cable has a forward limit position in the cable box corresponding to one rotary limit position of the tilt, and a reverse limit position in the cable box corresponding to another rotary limit position of the tilt, and at least at any position between the forward limit position and the reverse limit position, the cable has straight line parts both between the inlet and the first curved part and between the outlet and the first curved part.

According to an exemplary embodiment, both side walls of the cable box corresponding to the two sides of the first curved part are positioned respectively near the two limit positions of the first curved part, and have a shape corresponding to the first curved part respectively.

According to an exemplary embodiment, the structure can further comprise a guiding member on the side of the housing to guide the cable to form a second curved part near the first clamp member.

According to an exemplary embodiment, the guiding member can be an element of annular shape with an opening and an annular groove and is arranged around the rotary axis of the tilt, and the cable pass through the annular groove to form the second curved part.

According to an exemplary embodiment, the structure may further comprise a rotary fitting member having an air channel therein. The rotary fitting member is provided on the side of the housing on the tilt and has a first part fastened to the tilt and a second part rotatable around the rotary axis relative to the first part. An air hose is connected to the second part, and an air path extending to the inside of the tilt is formed by connecting the air hose to the air channel in the rotary fitting member.

According to an exemplary embodiment, the second part of the rotary fitting member is positioned in the opening of the guiding member.

According to an exemplary embodiment, clamping surfaces of the first clamp member are of an arc shape, a center of which is coaxial with the rotary axis of the tilt.

According to an exemplary embodiment, a center of the annular groove of the guiding member is coaxial with the rotary axis of the tilt.

According to an exemplary embodiment, the structure may further comprise a cover for covering the side of the housing along which the cable extends, and nips are provided on the inner side of the cover to fix the second part of the rotary fitting member.

According to an exemplary embodiment, the cable is a flexible printed circuit (FPC) or a flexible flat cable (FFC).

According to an exemplary embodiment, the structure may further comprise an air block provided in the tilt. The air block has an air inlet and the first part of the rotary fitting member is fluid communicated to the air inlet.

According to one aspect of the present invention, there is also provided a robot comprises the structure as described above.

### BRIEF DESCRIPTION OF THE DRAWINGS

When reading the following detailed description on the exemplary embodiments with reference to the drawings, the aim, features and advantages of the present invention become obvious, wherein
FIG. 1 illustrates the robot structure in the exemplary embodiments of the present invention.
FIG. 2 illustrates the robot structure of FIG. 1 without the guiding member and the side walls of the cable box.
FIG. 3 illustrates the guiding member of the embodiments of the present invention.
FIG. 4 illustrates the cover of the housing of the embodiments of the present invention.
FIG. 5 illustrates the tilt with an air block of the embodiments of the present invention.
FIG. 6 illustrates a cable routing and air routing in the robot structure in the embodiments of the present invention.

### DETAILED DESCRIPTION OF EMBODIMENTS

Hereinafter, exemplary embodiments will be referred to in describing the mechanism and spirit of the present invention. It should be understood that these embodiments are merely provided to facilitate those skilled in the art in understanding and in turn implementing the present invention, but not for limiting the scope of the present invention in any way.

Various embodiments of the present invention are described in detail herein in an exemplary way by referring to the drawings.

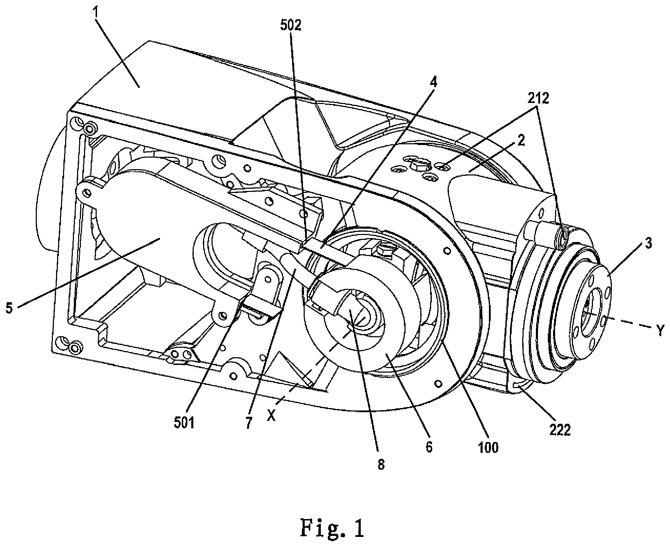

FIG. 1 illustrates a structure used for a robot in the exemplary embodiments of the present invention. Preferably, the structure is used on a wrist of a robot. It is appreciated for those skilled in the art that the structure can also be applied to other parts of a robot which need routing, such as the base part and the like.

As shown in Figure 1, the structure may comprise a housing 1 and a tilt 2 (also referred to as a rotary arm). The housing 1 can be fixed to the base part of a robot in various ways to form a robot arm, or connected to a front part of an upper robot arm in a rotary way to provide more flexibility. The tilt 2 is coupled to one end of the housing 1 and arranged to be rotatable around a rotary axis X in a plane within a certain angle relative to the housing 1.

Preferably, as shown Figure 1, a flange 3 is set on a front end of the tilt 2, where various working tools can be amounted, such as a welding gun and a spray gun etc. The flange 3 may be fixed to the tilt 2 or arranged on the tilt 2 to be rotatable around a rotary axis Y.

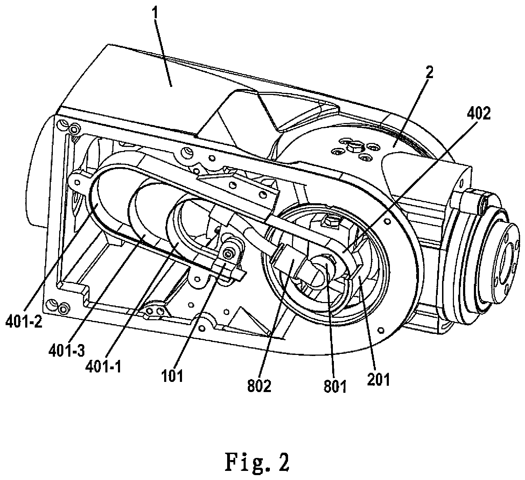

Specifically, as shown Figures 1 and 2, there is provided a round hole 100 on both sides of the front end of the housing 1. The center of the hole 100 is coaxial with the rotary axis X of the tilt 2, and the tilt is supported in the hole 100 by bearings in a rotary way. A cable 4 may enter into the tilt 2 from the hole 100 on one side wall of the housing, and exits from a cable export 222 on the front of the tilt under flange 3, and then is connected to a working tool mounted on the flange 3, thereby providing electric connection for the working tool. The electric connection provides the working tool with signal transmissions such as power and/or control signal. The outer cable can also go into the tilt 2 from the cable export 222, and be connected with the cable 4 within the tilt 2.

As shown in Figure 2, the structure further comprises a first clamp member 201, which is fixed on one side of the tilt 2 where the cable 4 enters into the tilt 2. The first clamp member 201 extends from the hole 100 and has a distance from the rotary axis X of the tilt 2. Preferably, the first clamp member 201 is positioned close to the circle of the hole 100. The first clamp member 201 may be rotated with the tilt 2 without interfering with the circle of the hole 100. Further, the first clamp member 201 clamps a portion of the cable 4 close to the tilt 2. Accordingly, when the tilt 2 rotates, the first clamp member 201 can drive the one end of the cable 4 to rotate over a certain circle distance.

Preferably, the first clamp member 201 comprises two arc clamping pieces, and clamping surfaces of the clamping pieces contacting the cable 4 are all arc surfaces. Optionally, the centers of the arc surfaces are coaxial with rotary axis X of the tilt. Accordingly, the cable 4 is clamped into an arc shape to guarantee a relatively large rotating radius when the cable rotates with the tilt, thereby enhancing the life time of the cable. Additionally, the outer arc surface of the first clamp member 201 has the same center with the hole 100, and thus it will not interfere with the hole 100 in rotation. It should be noted that, the arc shape of the clamping surfaces and the clamping pieces is not necessary. Any other shape can be used such as a simplest tiny flat plate, as long as its dimension does not lead to interference with surroundings.

As shown in Figure 2, the structure further comprises a second clamp member 101, which is fixed to the housing 1 and is used for clamping the other end of the cable 4 (far end from the tilt 2). The second clamp member 101 may be any structure used for fixing cables in the prior art.

As shown in Figures 1 and 2, the structure comprises a cable box 5, which is fixed to the housing 1. There is an inlet 501 and outlet 502 on one side of the cable box 5 close to the tilt 2. The cable 4 enters the cable box 5 from the inlet 501 after being clamped by the second clamp member 101 , and then forms a first curved part 401 (See Figure 2) in the cable box 5. Next, the cable 4 exits from the outlet 502, and is then clamped by the first clamp member 201.

Further with reference to Fig.2, the first curved part 401 of the cable 4 has a forward limit position 401-1 in the cable box 5 corresponding to a rotary limit position of the tilt 2, and a reverse limit position 401-2 corresponding to another rotary limit position of the tilt 2. Further, at least on any position between the forward limit position 401-1 and the reverse limit position 401-2, the cable 4 has straight line parts both between the inlet 501 and the first curved part 401 and between the outlet 502 and the first curved part 401, such that the cable 4 has a length with a reservior and the length between the first clamp member 201 and the second clamp member 101 allows the two limit positions to be reached by rotating tilt 2.

When the tilt 2 rotates to one limit position, the cable 4 is extended to the uttermost extent by the first clamp member 201. The straight line part between the outlet 502 and the first curved part 401 is dragged forward. The first curved part 401 is thereby moved to the end of cable 4 which is near the second clamp member 101, whereas the straight line part between inlet 501 and the first curved part 401 is shortened, thereby the first curved part is moved forward to the forward limit position 401-1.

When the tilt 2 rotates reversely to the other limit position, the cable 4 is pushed backwards by the first clamp member 201. Under the guidance of the cable box 5, the first curved part 401 is moved to the end of the cable 4 which is far from the second clamp member 101, whereas the straight line part between the inlet 501 and the first curved part 401 is extended, thereby the first curved part is moved backward to the reverse limit position 401-2.

Of course, when the tilt 2 is right in the middle position where the tilt 2 is in line with the housing 1, the first curved part 401 of the cable is also positioned in a middle position 401-3 in the cable box 5.

Both side walls of the cable box 5 corresponding to the two sides of the first curved part 401 are positioned respectively near the two limit positions of the first curved part 401, preferably having a shape corresponding to the first curved part (i.e. arc shape). Accordingly, the cable 4 is provided with enough space in the cable box 5 to move to both limit positions and better keep the arc shape of the first curved part 401 at the limit positions so as to protect the cable.

Optionally, the side wall of the cable box 5 close to the tilt 2 is positioned between the inlet 501 and the outlet 502. The inlet 501 and outlet 502 are sized such that the cable 4 can go through without friction, and merely a tiny space exists between the cable 4 and the inlet 501 and outlet 502. Accordingly, when extending and retreating in the inlet 501 and outlet 502, the cable 4 will not sway, but move strictly along a movement path with a curved radius defined by the cable box 5, thereby over-bending of the cable 4 is avoided.

The curving angle of the first curved part 401 of the cable 4 is preferably 180 degree, so as to make the two straight line parts of the cable parallels with each other, thereby saving space and facilitating the manufacture of the cable box. Of course, the curving angle can be above or below 180 degree based on the specific conditions of the side space of the housing.

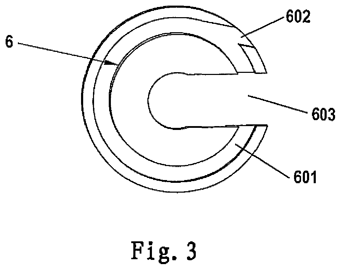

As shown in Figures 1 and 3, in an optional embodiment of the present invention, the structure can further comprise a guiding member 6, which is arranged on the tilt 2 around the rotary axis X of the tilt. Specifically, as shown in Figure 3, the guiding member 6 is an annular element with an opening 603 and there is an annular groove 601 in the guiding member 6. The cable 4 enters the annular groove 601 through a window 602 on the circular side wall of the guiding member 6. The window 602 is positioned near one side of the opening of the guiding member. The cable 4 exits from the end face on the other side of the opening 603 of the guiding member 6, and enters the tilt 2 through the hole 100. Optionally, the center of the annular guiding member 6 has the same axis with the rotary axis X of the tilt 2, and in turn has the same axis with the center of the arc surfaces on the first clamp member 201. The annular groove 601 of the guiding member 6 is adapted for the first clamp member 201 to pass through.

Therefore, under the guidance of the annular groove 601 of the guiding member 6 and the first clamp member 201, the cable 4 forms the second curved part 402 near the first clamp member 201. When the cable 4 extends and retreats with the rotation of the tilt 2, the cable 4 moves along a curved track having the same axis with the rotary axis X of the tilt 2 near the first clamp member 201. Thus, the cable 4 may be extended smoothly with the rotation of the tilt 2, without being over-bended, which is important to extending the life time of the cable and preventing the rotation of the tilt from being stuck by the cable.

The guiding member 6 may be fixed to the housing by various known means, such as fixing the guiding member to the housing by connectors to prevent the guiding member from rotating with the tilt 2 and the cable 4. The positioning of the guiding member 6 is especially advantageous in the embodiment described below.

In Figure 1, preferably, the structure used for the robot has a structure for supplying air to the working tools on the end of the tilt 2. Specifically, an air block (not indicated) are provided in the tilt 2, and at least one air vent 212 connected to the air block are provided on the tilt 2. The air vent 212 is connected to an air inlet of an air-requesting tool fixed on the front side of the tilt. An air hose 7 extended from the housing 1 is fixed to the housing by a fixer. The air hose 7 is fluid connected to the air block in the tilt 2 by a rotary fitting member 8.

As shown in Figure 2, the rotary fitting member 8 has a first part 801 fastened to the tilt 2, and a second part 802 rotatable around the rotary axis X of the tilt 2 relative to the first part 801. The first part 801 is mounted on the tilt in the position of the rotary axis and is rotatable with the tilt 2. The second part 802 is connected to the air hose 7. Thus, when the tilt 2 rotates, the air hose fixed to the housing will not inhibit the rotation of the tilt. The first part 801 and the second part 802 of the rotary fitting member 8 have an air channel. An air path extending to the air block inside the tilt is formed by connecting the air hose 7 to the air channel of the rotary fitting member 8. In this way, the fluid connection from the air hose to the tilt is maintained during the rotation of the tilt.

In this case, the guiding member 6 as described above is preferably arranged around the axis X in a floating manner, that is, the guiding member is not fixed by any fixer. The second part 802 of the rotary fitting member 8 is positioned in the opening 603 of the guiding member 6. When the tilt 2 rotates and the cable 4 extends and retreats therewith, the first clamp member 201 goes through the annular groove 601 in the guiding member 6 and a friction may be generated between the cable 4 and the guiding member 6, which may bring the guiding member 6 rotating therewith. When the guiding member 6 rotates over a tiny angle, one of the two end faces of the opening 603 of the guiding member 6 will be blocked by the second part 802 of the rotary fitting member 8. Since the second part 802 of the rotary fitting member 8 is fixed relative to the housing (at least not able to move extensively), thus, the rotation of the guiding member 6 along the circular direction is inhibited, and the guiding member 6 is positioned in the circular direction. When the tilt 2 rotates reversely, the other end face of the opening 601 of the guiding member 6 will be blocked by the second part 802 of the rotary fitting member 8. The guiding member 6 is also positioned in the circular direction.

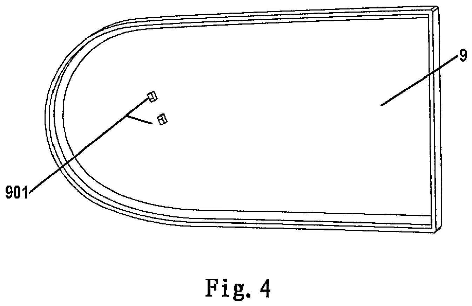

As shown in Fig.4, the structure preferably comprises a cover 9, which is provided to cover the side of the housing 1 arranged with the cable 4. Optionally, there are nips 901 on the inner side of the cover, corresponding to the position of the second part 802 of the rotary fitting member 8. The nips 901 are used to fix the second part 802 of the rotary fitting member when the cover is fixed to the housing, so as to prevent the undesired movement of the second part 802 of the rotary fitting member 8 with the rotation of the tilt 2. The further positioning of the second part 802 of the rotary fitting member also prevent the rotation of the guiding member 6. In addition, the cover 9 also prevents the over-movement of the guiding member 6 in the axis direction, so as to prevent the guiding member 6 coming off from the cable and the first clamp member.

The floating positioning manner of the guiding member 6 provides it with a small moving clearance both in the axial and circular directions, which facilitates guiding the cable to a great extent. The rotary fitting member 8 and the cover 9 also guarantee the guiding member 6 in the working position all the time, without deflection or coming off.

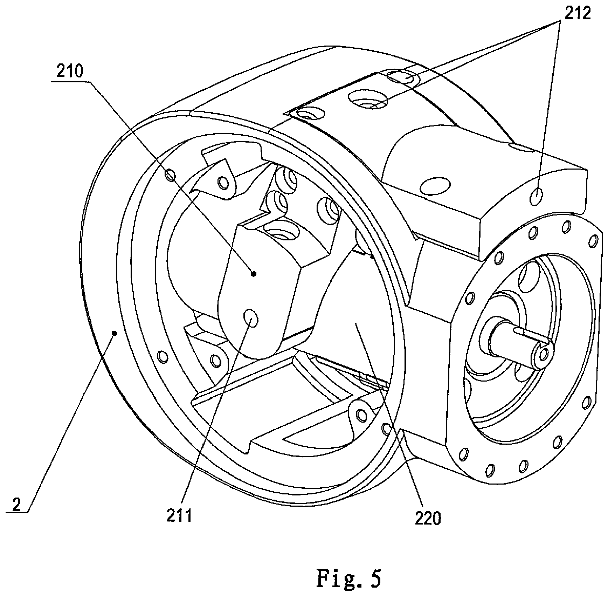

Figure 5 illustrates an embodiment of an air block 210 in the tilt 2. There is a driving component 220 in the center of the tilt 2. An air block 210 is positioned on one side of the driving component. The air block has, on the surface facing the side wall of the tilt 2 coupled in rotation with the housing 1, an air inlet 211. The first part 801 of the rotary fitting member 8 is fixed to the air inlet 211 and fluid connected thereto. The air block 210 can extend upward to the top of the tilt 2, and forward to the top of the flange on the front side of the tilt 2. A number of air vents 212 are arranged on the top of the tilt 2 and/or on the end face on the upper part of the flange facing the front. There is an air channel inside the air block 210 extending from the air inlet 211 to at least one air vent 212. Preferably, the air inlet 211 is fluid connected to all the air vents 212. The unused air vent may be blocked with plugs according to actual needs. Of course, the air vents may be set on other positions of the tilt according to actual needs, to facilitate connection with the air inlet of working tools.

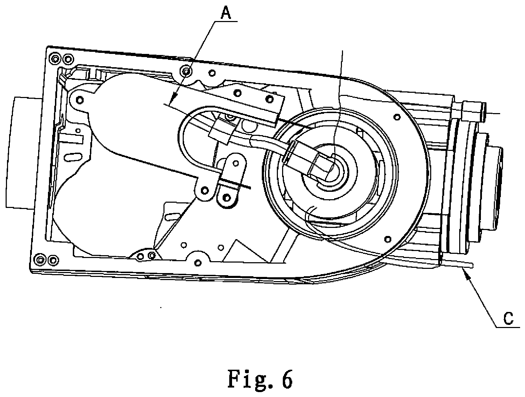

Figure 6 illustrates the cable routing and air routing in the robot structure in the optional embodiments of the present invention. The cable 4 enters the cable box from the second clamp member 101, and exits the cable box after passing through the first curved part inside the cable box. Then, the cable 4 enters the annular grooving of the guiding member 6, and exits from the lower end face of the opening of the guiding member and goes through the hole 100 into the tilt 2. The cable 4 comes out of the cable export on the front side of the tilt to be connected to a working tool, thus forming a cable routing C.

The air enters from the air hose 7 to the rotary fitting member 8, and enters the air block in the tilt 2, and exits from the air vents on the tilt connecting to the tools, thus forming a air routing A.

In such way, the cable routing and air routing enter the tilt from the position of the rotary axis of the tilt, thereby avoiding routing around the tilt, saving space and preventing the tilt from interfering with surroundings during rotation. Meanwhile, the cable enters the tilt from the position of the rotary axis of the tilt and a cable extension-and-retreating mechanism is provided to prevent the limitation of the cable on the rotation of tilt.

The cable is preferred to be a flexible printed circuit (FPC) or a flexible flat cable (FFC). These kinds of cables are thin in thickness and have proper tenacity, thus, easy to be curved and having a resiliency to recover the original shape. This is advantageous to the extension and retreating of a cable. Of course, other kinds of cable are also available, such as common cable.

By studying the drawings, the disclosure of the present text, and the attached Claims, those skilled in the art may understand and implement other modifications of the disclosed embodiments during the implementation of the present invention. In the claims, "comprising" does not exclude other elements or steps, and "a" or "one" does not exclude the plural concept. The simple fact of illustrating specific methods in the dependent claims, which are mutually different from each other, does not indicate that the combination of these methods cannot be used advantageously. The labels in drawings of the claims should not be interpreted as limiting the scopes thereof.

## Claims

1. A structure used for a robot, comprising:
a housing (1);
a tilt (2) coupled to the housing and arranged to be rotatable around a rotary axis (X) relative to the housing,
a cable (4) arranged to extend along a side of the housing and pass through the tilt (2);
a first clamp member (201) provided on the tilt (2), arranged to hold a portion of the cable (4) to pass through the tilt (2) such that one end of the cable is rotatable with the tilt around the rotary axis;
a second clamp member (101) provided on the side of the housing (1) and arranged to hold another end of the cable (4),
wherein a length of the cable (4) between the first clamp member (201) and the second clamp member (101) enables the tilt (2) to rotate to two limit positions thereof; and
a cable box (5) mounted on the side of the housing (1), the cable box having an inlet (501) and an outlet (502) on one side thereof close to the tilt,
wherein the cable (4) enters the cable box (5) from the inlet (501) after being clamped by the second clamp member (101), then forms the first curved part (401) in the cable box (5), then exits from the outlet (502), and is clamped by the first clamp member (201).

2. The structure according to Claim 1, wherein,
the first curved part (401) of the cable has a forward limit position (401-1) in the cable box (5) corresponding to one rotary limit position of the tilt, and a reverse limit position (401-2) in the cable box (5) corresponding to another rotary limit position of the tilt, and
at least at any position between the forward limit position (401-1) and the reverse limit position (401-2), the cable (4) has straight line parts both between the inlet (501) and the first curved part (401) and between the outlet (502) and the first curved part (401).

3. The structure according to Claim 1, wherein,
both side walls of the cable box (5) corresponding to the two sides of the first curved part (401) are positioned respectively near the two limit positions of the first curved part (401), and have a shape corresponding to the first curved part respectively.

4. The structure according to any of Claims 1 to 3, further comprising:
a guiding member (6) arranged on the side of the housing to guide the cable (4) to form a second curved part (402) near the first clamp member (201), wherein preferably
the guiding member (6) is an element of annular shape with an opening (603) and an annular groove (601), and is arranged around the rotary axis (X) of the tilt, and
the cable (4) pass through the annular groove (601) to form the second curved part (402).

5. The structure according to any of Claims 1 to 3, further comprising:
a rotary fitting member (8) having an air channel therein, wherein the rotary fitting member (8) is provided on the side of the housing on the tilt (2) and has a first part (801) fastened to the tilt (2) and a second part (802) rotatable around the rotary axis (X) relative to the first part (801),
wherein an air hose (7) is connected to the second part (802), and an air path extending to the inside of the tilt (2) is formed by connecting the air hose (7) to the air channel in the rotary fitting member(8).

6. The structure according to Claim 5, further comprising:
a guiding member (6) arranged on the side of the housing to guide the cable (4) to form a second curved part (402) near the first clamp member (201).

7. The structure according to Claim 6, wherein the guiding member (6) is an annular element having an opening (603) and an annular groove (601) and is arranged around the rotary axis (X) of the tilt, and
the cable (4) pass through the annular groove (601) to form the second curved part (402), and the second part (802) of the rotary fitting member (8) is positioned in the opening (603) of the guiding member (6).

8. The structure according to any of Claims 1 to 3, wherein clamping surfaces of the first clamp member (201) are of an arc shape, a center of which is coaxial with the rotary axis (X) of the tilt.

9. The structure according to Claims 4 or 7, wherein a center of the annular groove (601) of the guiding member (6) is coaxial with the rotary axis (X) of the tilt.

10. The structure according to Claim 5, further comprising:
a cover (9) for covering the side of the housing along which the cable (4) extends,
wherein nips (901) are provided on the inner side of the cover (9) to fix the second part (802) of the rotary fitting member (8); or
an air block (210) provided in the tilt (2), wherein the air block has an air inlet (211) and the first part (801) of the rotary fitting member is fluid communicated to the air inlet (211).

11. The structure according to any of Claims 1 to 3, wherein the cable (4) is a flexible printed circuit (FPC) or a flexible flat cable (FFC).

12. The structure according to Claim 5, wherein the cable (4) is a flexible printed circuit (FPC) or a flexible flat cable (FFC).

13. A robot comprising the structure according to any one of Claims 1-12.

## Patentansprüche

1. Struktur, die für einen Roboter verwendet wird, Folgendes umfassend:
ein Gehäuse (1);
einen Schwenkarm (2), der mit dem Gehäuse gekoppelt und drehbeweglich um eine Drehachse (X) in Bezug auf das Gehäuse angeordnet ist,
ein Kabel (4), das sich entlang einer Seite des Gehäuses erstreckend und durch den Schwenkarm (2) verlaufend angeordnet ist;
ein erstes am Schwenkarm (2) vorgesehenes Klemmteil (201), das dazu eingerichtet ist, einen Abschnitt des durch den Schwenkarm (2) zu verlaufenden Kabels (4) so zu halten, dass ein Ende des Kabels zusammen mit dem Schwenkarm um die Drehachse drehbar ist;
ein zweites Klemmteil (101), das an der Seite des Gehäuses (1) vorgesehen und dazu eingerichtet ist, ein anderes Ende des Kabels (4) zu halten,
wobei eine Länge des Kabels (4) zwischen dem ersten Klemmteil (201) und dem zweiten Klemmteil (101) es dem Schwenkarm (2) ermöglicht, sich zu zwei Grenzpositionen von diesem zu drehen; und
eine Kabeldose (5), die an der Seite des Gehäuses (1) angebracht ist, wobei die Kabeldose einen Einlass (501) und einen Auslass (502) auf einer Seite von dieser nahe dem Schwenkarm hat,
wobei das Kabel (4) in die Kabeldose (5) vom Einlass (501) her eintritt, nachdem es vom zweiten Klemmteil (101) in Klemmeingriff genommen wurde, dann das erste gekrümmte Teil (401) in der Kabeldose (5) bildet, dann aus dem Auslass (502) austritt und vom ersten Klemmteil (201) in Klemmeingriff genommen wird.

2. Struktur nach Anspruch 1, wobei
das erste gekrümmte Teil (401) des Kabels eine Vorwärtsgrenzposition (401-1) in der Kabeldose (5), die einer Drehgrenzstellungstellung des Schwenkarms entspricht, und eine Rückwärtsgrenzposition (401-2) in der Kabeldose (5) hat, die einer anderen Drehgrenzstellung des Schwenkarms entspricht, und
zumindest an irgendeiner Position zwischen der Vorwärtsgrenzposition (401-1) und der Rückwärtsgrenzposition (401-2) das Kabel (4) geradlinige Teile sowohl zwischen dem Einlass (501) und dem ersten gekrümmten Teil (401) als auch zwischen dem Auslass (502) und dem ersten gekrümmten Teil (401) hat.

3. Struktur nach Anspruch 1, wobei
beide Seitenwände der Kabeldose (5), die den zwei Seiten des ersten gekrümmten Teils (401) entsprechen, jeweils nahe an den zwei Grenzpositionen des ersten gekrümmten Teils (401) positioniert sind und jeweils eine Form haben, die dem ersten gekrümmten Teil entspricht.

4. Struktur nach einem der Ansprüche 1 bis 3, darüber hinaus umfassend:
ein Führungsteil (6), das an der Seite des Gehäuses zum Führen des Kabels (4) angeordnet ist, um ein zweites gekrümmtes Teil (402) nahe dem ersten Klemmteil (201) zu bilden, wobei vorzugsweise
das Führungsteil (6) ein Element von ringförmiger Gestalt mit einer Öffnung (603) und einer Ringkehle (601) darstellt und um die Drehachse (X) des Schwenkarms herum angeordnet ist, und
das Kabel (4) durch die Ringkehle (601) verläuft, um das zweite gekrümmte Teil (402) zu bilden.

5. Struktur nach einem der Ansprüche 1 bis 3, darüber hinaus umfassend:
ein Schwenkarmaturteil (8) mit einem Luftkanal in diesem, wobei das Schwenkarmaturteil (8) an der Seite des Gehäuses am Schwenkarm (2) vorgesehen ist und ein erstes Teil (801), das am Schwenkarm (2) befestigt ist, und ein zweites Teil (802) hat, das in Bezug auf das erste Teil (801) um die Drehachse (X) drehbar ist,
wobei ein Luftschlauch (7) an das zweite Teil (802) angeschlossen ist, und ein Luftweg, der sich zur Innenseite des Schwenkarms (2) erstreckt, gebildet wird, indem der Luftschlauch (7) an den Luftkanal im Schwenkarmaturteil (8) angeschlossen wird.

6. Struktur nach Anspruch 5, darüber hinaus umfassend:
ein Führungsteil (6), das an der Seite des Gehäuses zum Führen des Kabels (4) angeordnet ist, um ein zweites gekrümmtes Teil (402) nahe dem ersten Klemmteil (201) zu bilden.

7. Struktur nach Anspruch 6,
wobei das Führungsteil (6) ein ringförmiges Element mit einer Öffnung (603) und einer Ringkehle (601) darstellt und um die Drehachse (X) des Schwenkarms herum angeordnet ist, und
das Kabel (4) durch die Ringkehle (601) verläuft, um das zweite gekrümmte Teil (402) zu bilden, und das zweite Teil (802) des Schwenkarmaturteils (8) in der Öffnung (603) des Führungsteils (6) positioniert ist.

8. Struktur nach einem der Ansprüche 1 bis 3, wobei Klemmflächen des ersten Klemmteils (201) von einer Bogenform sind, deren Mitte koaxial mit der Drehachse (X) des Schwenkarms ist.

9. Struktur nach den Ansprüchen 4 oder 7, wobei die Mitte der Ringkehle (601) des Führungsteils (6) koaxial mit der Drehachse (X) des Schwenkarms ist.

10. Struktur nach Anspruch 5, darüber hinaus umfassend:
eine Abdeckung (9) zum Abdecken der Seite des Gehäuses, entlang der sich das Kabel (4) erstreckt,
wobei Ansätze (901) auf der Innenseite der Abdeckung (9) vorgesehen sind, um das zweite Teil (802) des Schwenkarmaturteils (8) zu fixieren; oder
einen Luftblock (210), der im Schwenkarm (2) vorgesehen ist, wobei der Luftblock einen Lufteinlass (211) hat und das erste Teil (801) des Schwenkarmaturteils in Fluidverbindung mit dem Lufteinlass (211) gesetzt ist.

11. Struktur nach einem der Ansprüche 1 bis 3, wobei es sich bei dem Kabel (4) um eine flexible gedruckte Schaltung (FPC) oder ein flexibles Flachkabel (FFC) handelt.

12. Struktur nach Anspruch 5, wobei es sich bei dem Kabel (4) um eine flexible gedruckte Schaltung (FPC) oder ein flexibles Flachkabel (FFC) handelt.

13. Roboter mit der Struktur nach einem der Ansprüche 1 bis 12.

## Revendications

1. Structure utilisée pour un robot, comprenant:
un boîtier (1);
une partie inclinée (2) couplée au boîtier et disposée de manière à pouvoir tourner autour d'un axe de rotation (X) par rapport au boîtier,
un câble (4) disposé de manière à s'étendre le long d'un côté du boîtier et à passer à travers la partie inclinée (2);
un premier élément de serrage (201) prévu sur la partie inclinée (2), disposé de manière à maintenir une partie du câble (4) à passer à travers la partie inclinée (2) de sorte qu'une extrémité du câble puisse tourner avec la partie inclinée autour de l'axe de rotation ;
un deuxième élément de serrage (101) prévu sur le côté du boîtier (1) et disposé de manière à maintenir une autre extrémité du câble (4),
dans laquelle une longueur du câble (4) entre le premier élément de serrage (201) et le deuxième élément de serrage (101) permet à la partie inclinée (2) de tourner vers deux positions limites de cette dernière; et
une boîte de câble (5) montée sur le côté du boîtier (1), la boîte de câble présentant une entrée (501) et une sortie (502) d'un côté de cette dernière à proximité de la partie inclinée,
dans laquelle le câble (4) pénètre dans la boîte de câble (5) à partir de l'entrée (501) après avoir été serré par le deuxième élément de serrage (101), puis forme la première partie courbe (401) dans la boîte de câble (5), puis sort de l'orifice de sortie (502) et est serré par le premier élément de serrage (201).

2. Structure selon la revendication 1, dans laquelle
la première partie courbe (401) du câble présente une position limite en avant (401-1) dans la boîte de câble (5) correspondant à une position limite de rotation de la partie inclinée, et une position limite inverse (401-2) dans la boîte de câble (5) correspondant à une autre position limite de rotation de la partie inclinée, et
au moins en une position quelconque entre la position limite en avant (401-1) et la position limite inverse (401-2), le câble (4) présente des parties de ligne droite tant entre l'entrée (501) et la première partie courbe (401) qu'entre la sortie (502) et la première partie courbe (401).

3. Structure selon la revendication 1, dans laquelle
les deux parois latérales de la boîte de câble (5) correspondant aux deux côtés de la première partie courbe (401) sont positionnées respectivement à proximité des deux positions limites de la première partie courbe (401), et présentent respectivement une forme correspondant à la première partie courbe.

4. Structure selon l'une quelconque des revendications 1 à 3, comprenant par ailleurs:
un élément de guidage (6) disposé sur le côté du boîtier pour guider le câble (4) pour former une deuxième partie courbe (402) à proximité du premier élément de serrage (201), où de préférence
l'élément de guidage (6) est un élément de forme annulaire avec une ouverture (603) et une rainure annulaire (601) et est disposé autour de l'axe de rotation (X) de la partie inclinée, et
le câble (4) passe à travers la rainure annulaire (601) pour former la deuxième partie courbe (402).

5. Structure selon l'une quelconque des revendications 1 à 3, comprenant par ailleurs:
un élément de montage rotatif (8) présentant un canal d'air, où l'élément de montage rotatif (8) est prévu sur le côté du boîtier sur la partie inclinée (2) et présente une première partie (801) fixée à la partie inclinée (2) et une deuxième partie (802) pouvant tourner autour de l'axe de rotation (X) par rapport à la première partie (801),
dans laquelle un tuyau d'air (7) est connecté à la deuxième partie (802), et un trajet d'air s'étendant vers l'intérieur de la partie inclinée (2) est formé en connectant le tuyau d'air (7) au canal d'air dans l'élément de montage rotatif (8).

6. Structure selon la revendication 5, comprenant par ailleurs:
un élément de guidage (6) disposé sur le côté du boîtier pour guider le câble (4) pour former une deuxième partie courbe (402) à proximité du premier élément de serrage (201).

7. Structure selon la revendication 6, dans laquelle l'élément de guidage (6) est un élément annulaire présentant une ouverture (603) et une rainure annulaire (601) et est disposé autour de l'axe de rotation (X) de la partie inclinée, et
le câble (4) passe à travers la rainure annulaire (601) pour former la deuxième partie courbe (402), et la deuxième partie (802) de l'élément de montage rotatif (8) est positionnée dans l'ouverture (603) de l'élément de guidage (6).

8. Structure selon l'une quelconque des revendications 1 à 3, dans laquelle les surfaces de serrage du premier élément de serrage (201) sont en forme d'arc dont le centre est coaxial à l'axe de rotation (X) de la partie inclinée.

9. Structure selon les revendications 4 ou 7, dans laquelle un centre de la rainure annulaire (601) de l'élément de guidage (6) est coaxial à l'axe de rotation (X) de la partie inclinée.

10. Structure selon la revendication 5, comprenant par ailleurs:
un couvercle (9) destiné à recouvrir le côté du boîtier le long duquel s'étend le câble (4),
dans laquelle des pincements (901) sont prévus sur le côté intérieur du couvercle (9) pour fixer la deuxième partie (802) de l'élément de montage rotatif (8); ou
un bloc d'air (210) prévu dans la partie inclinée (2), où le bloc d'air présente une entrée d'air (211) et la première partie (801) de l'élément de montage rotatif est en communication de fluide avec l'entrée d'air (211).

11. Structure selon l'une quelconque des revendications 1 à 3, dans laquelle le câble (4) est un circuit imprimé souple (FPC) ou un câble plat souple (FFC).

12. Structure selon la revendication 5, dans laquelle le câble (4) est un circuit imprimé souple (FPC) ou un câble plat souple (FFC).

13. Robot comprenant la structure selon l'une quelconque des revendications 1 à 12.
